# EUROPEAN PATENT APPLICATION

(11) **EP 2 330 283 A1**
(43) Date of publication of application: **08.06.2011**
(21) Application number: 08877077.1
(22) Date of filing: 29.09.2008
(51) Int. Cl.: F02D 41/38

(54) **FUEL INJECTION CONTROL DEVICE FOR INTERNAL-COMBUSTION ENGINE**

(71) Applicant: Toyota Jidosha Kabushiki Kaisha, Toyota-shi, Aichi 471-8571 (JP)
(72) Inventor: NADA, Mitsuhiro, Toyota-shi Aichi 471-8571 (JP)
(74) Representative: TBK
(86) International application number: PCT/JP2008/067632
(87) International publication number: WO 2010/035341

(57) **Abstract**

In a common rail diesel engine, main injection is executed as injection divided into first divided main injection and second divided main injection. In the first divided main injection, fuel injection is stopped before a fuel evaporation speed in a combustion field becomes greater than an oxygen supply speed. After fuel injection is temporarily stopped, the combustion field of fuel that was injected in the first divided main injection flows in a circumferential direction within a combustion chamber according to a swirl flow, and the second divided main injection is executed when a region where the fuel evaporation speed is less than the oxygen supply speed, this being a region between combustion fields, has moved to a position facing an injection nozzle.

## Description

### [Technical Field]

The present invention relates to a fuel injection control apparatus of an internal combustion engine represented by a diesel engine. Specifically, the present invention relates to a measure for attaining optimization of an injection mode when executing main injection from a fuel injection valve (below, also referred to as main injection) as injection divided into a plurality of instances of divided main injection.

### [Background Art]

As is commonly known from the conventional technology, in a diesel engine used as an automobile engine or the like, fuel injection control is performed that adjusts the timing and amount of fuel injection from a fuel injection valve (below, also referred to as an injector) according to engine speed, amount of accelerator operation, coolant temperature, intake air temperature, and so forth.

Combustion of the diesel engine includes premix combustion and diffusion combustion. When fuel injection from the injector is started, first, a combustible air-fuel mixture is produced by vaporization and diffusion of fuel (ignition delay period). Next, this combustible air-fuel mixture self-ignites at several locations of a combustion chamber at about the same time, and combustion quickly progresses (premix combustion). Further, fuel injection into the combustion chamber is continued, and combustion is continuously performed (diffusion combustion). Thereafter, unburned fuel exists even after fuel injection has ended, so heat generation continues for some amount of time (after-burn period).

Incidentally, in an expansion (combustion) stroke of the diesel engine, when there is incomplete combustion of the air-fuel mixture in the combustion chamber, smoke occurs in the exhaust gas, inviting worsened exhaust emissions. As a measure for reducing the amount of smoke that occurs, for example in below PTLs 1 and 2, technology is disclosed in which after-injection is executed after main injection, and smoke is recombusted along with fuel that was injected in this after-injection.
[PTL 1] JP 2005-233163A
[PTL 2] JP 2008-196306A
[PTL 3] JP 2001-55950A
[PTL 4] JP 2006-194190A
[PTL 5] JP 2008-144673A

### [Summary of Invention]

### [Technical Problem]

Incidentally, the fuel injection timing and the fuel injection amount for reducing smoke as described above (the injection timing and the injection amount of the above after-injection) have conventionally been obtained by performing trial and error adaptation (by constructing an appropriate injection pattern for each type of engine).

Also, conventionally, adequate analysis of a circumstance in which the smoke occurs has not been performed, so it has been unclear which fuel injection is the cause of smoke occurring when a plurality of instances of fuel injection (such as pilot injection, main injection, and after-injection) were executed.

Therefore, it has merely been the case that after-injection is executed by the above trial and error to obtain a fuel injection timing and a fuel injection amount that attain smoke reduction as adapted values.

Thus, in the conventional technology, as an injection mode for reducing the amount of smoke in exhaust gas, a systematic fuel injection control technique common to various engines has not yet been constructed.

Consequently, the inventors of the present invention analyzed the circumstances in which the smoke occurs. This is described in detail below. Smoke occurs in a circumstance in which there is an inadequate amount of oxygen in the combustion field. When smoke occurs due to combustion of fuel that has been injected in main injection, there is already an insufficient amount of oxygen in the combustion field. The inventors found that as a result, it is not possible to recombust this smoke even if after-injection is executed to again supply fuel to that combustion field (the combustion field where smoke is occurring). That is, the inventors confirmed through testing and simulation that the conventionally accepted approach of eliminating smoke by recombusting the smoke through after-injection is mistaken. Actually, reduction of the injection amount in main injection by the amount of increase in engine torque that accompanies execution of after-injection results in suppression of occurrence of smoke caused by main injection. The inventors reached the conclusion that elimination of smoke once it has occurred is substantially impossible, and so construction of a fuel injection mode that does not cause smoke to occur is the most appropriate technique for reducing the amount of smoke in exhaust gas.

Furthermore, the inventors of the present invention performed a more detailed analysis of the circumstances in which smoke occurs in the combustion field where fuel that was injected in main injection is combusted. Conventionally, it has been thought that whether or not smoke occurs is determined from the relationship between a "fuel amount" and an "oxygen amount" that exist in the combustion field, that is, it is has been thought that smoke will occur in a state where the "oxygen amount" is inadequate relative to the "fuel amount" that exists in the combustion field. However, the inventors found this conventional thinking to be in error. A more specific description is given below.

In the combustion field where fuel that was injected in main injection is combusted (for example, in each of combustion fields at 10 locations in the combustion chamber when there are injectors having 10 injection nozzles), a temperature increase quickly advances with combustion of the air-fuel mixture, and fuel is supplied continuously in main injection to the combustion field having an increased temperature. Therefore, thermal decomposition of the fuel continuously supplied to this combustion field advances further and the evaporation speed of that fuel increases as the temperature of the combustion field increases.

Accordingly, in a combustion field having a low temperature, even if much fuel is supplied, the evaporation speed of that fuel is low, so the generated amount of combustible air-fuel mixture is suppressed. As a result, in this state an oxygen insufficiency is unlikely to occur, and smoke also is unlikely to occur. On the other hand, in a combustion field having a high temperature, supplied fuel receives the heat energy of the combustion field and continually undergoes thermal decomposition, and the temperature of the combustion field is further increased by combustion of that fuel. Therefore, the fuel evaporation speed increases in an accelerated manner, and in this state oxygen insufficiency is likely to occur, and smoke also is likely to occur.

Thus, the inventors of the present invention confirmed through testing and simulation that whether or not smoke occurs depends not on the "fuel amount" existing in the combustion field, but on the "fuel evaporation speed" of fuel that has been supplied to the combustion field. The inventors reached the conclusion that "fuel evaporation speed" is the most important factor when verifying the combustion state in the combustion field.

Thus, the inventors of the present invention found that whether or not smoke due to the above main injection occurs is more heavily dependent on the "fuel evaporation speed" and the "oxygen supply speed" in the combustion field within the combustion chamber (and is not influenced by the "fuel amount" and the "oxygen amount" existing in the combustion field). The inventors arrived at the present invention as a result of investigation based on that knowledge.

Even assuming a circumstance in which the "fuel evaporation speed" is high, it is conceivable that if the injection amount per instance of main injection is dramatically decreased, an oxygen insufficiency will not occur in the combustion field, and so occurrence of smoke can be suppressed. PTL 3 is based on this technical idea. PTL 3 discloses executing main injection as injection divided into a plurality of instances of divided main injection.

However, it is not possible to reliably prevent smoke from occurring merely by dividing main injection. The reason for this is that since the smoke occurrence principle, as described above, depends on the relationship between the "fuel evaporation speed" and the "oxygen supply speed" in the combustion field, when second and subsequent instances of divided main injection are executed in a region of low "oxygen supply speed" (for example, the combustion field where fuel was injected in the first instance of divided main injection), there is a concern that smoke will occur due to second and subsequent instances of divided main injection. That is, in PTL 3, it is described that "the combustion state can be dramatically improved by control of division of main injection, so a sudden increase in smoke can also be prevented", but by merely dividing main injection, the relationship between the "fuel evaporation speed" and the "oxygen supply speed" is not appropriately adjusted, so there remains a concern that smoke will occur.

Also, in the technology disclosed in PTL 4, pilot injection is executed prior to main injection, and by causing fuel that was injected in pilot injection to exist in an outer circumferential portion within a cavity that has been formed in a piston top portion, and causing fuel that was injected in main injection to exist in a center portion within the cavity, ignition is caused to occur starting from the outer circumferential portion within the cavity, where mixing with air has progressed, and thus the occurrence of smoke is suppressed.

However, in the technology of PTL 4 as well, smoke occurrence is not suppressed based on the relationship between the "fuel evaporation speed" and the "oxygen supply speed", rather, it is still the case that substantially all of the fuel that was injected in main injection is injected in a comparatively large amount to the same combustion field. Therefore, there is a risk that the "fuel evaporation speed" in this combustion field will suddenly increase, causing an oxygen insufficiency to occur, so that still the amount of smoke occurring still increases.

Furthermore, PTL 5 discloses technology whereby the positional relationship of pilot injection and main injection relative to each other is prescribed according to a swirl ratio. That is, by appropriately controlling the swirl ratio, it is made possible to prevent a collision between fuel that was injected in pilot injection and fuel that was injected in main injection. However, in this case as well, substantially all of the fuel that was injected in main injection is injected in a comparatively large amount to the same combustion field. That is, in this case as well, there is a risk that the "fuel evaporation speed" in the combustion field will suddenly increase, causing an oxygen insufficiency to occur, so that the amount of smoke occurring increases.

The present invention has been achieved in view of the above, and an object thereof is to provide, in a compression self-igniting internal combustion engine that enables main injection to be executed in a divided manner, a fuel injection control apparatus capable of reducing the amount of smoke occurring in exhaust gas.

### [Solution to Problem]

### - Principles of Solution -

A principle of the solution provided by the present invention for achieving the above aim is that, by adopting a configuration in which, when main injection is executed through a plurality of instances of divided main injection, the injection timing (injection end timing) of divided main injection is appropriately set, so that the evaporation speed of fuel injected in divided main injection does not become greater than the oxygen supply speed in the combustion field where that fuel is supplied, and thus occurrence of smoke in that combustion field is suppressed.

### - Solving Means -

Specifically, the present invention is premised on a fuel injection control apparatus of a compression self-igniting internal combustion engine that has a fuel injection valve with a multidirectional injection nozzle facing a combustion chamber, and that is capable of executing main injection with an injection pattern of the fuel injection valve being a plurality of instances of divided main injection. This fuel injection control apparatus of an internal combustion engine is provided with divided main injection control means that temporarily stops, when executing the divided main injection, before an evaporation speed of fuel injected in that divided main injection becomes greater than an oxygen supply speed in a combustion field where that fuel is being supplied, the divided main injection toward that combustion field.

The fuel evaporation speed referred to here is a vaporized fuel amount per unit time when fuel that was injected to a combustion field is vaporized to an extent that enables formation of a combustible air-fuel mixture, and is determined according to the thermal decomposition speed of fuel, which changes according to the temperature of the combustion field. The oxygen supply speed is an amount of oxygen that contributes to combustion of fuel per unit time in the combustion field, and is a value that depends on the oxygen density in the combustion field. A state in which the fuel evaporation speed is greater than the oxygen supply speed means a state inviting a circumstance in which, in comparison to the oxygen amount necessary to cause combustion of the majority of vaporized fuel existing in the combustion field, the oxygen amount actually supplied for that combustion in the combustion field is inadequate.

According to this specific aspect, when executing main injection, first, a subsequent divided main injection is executed after a preceding divided main injection has been executed. An end timing of the preceding divided main injection is set to a time before the evaporation speed of fuel injected in that divided main injection becomes greater than the oxygen supply speed in the combustion field where that fuel is being supplied. Therefore, in the combustion field of fuel that has been injected by this preceding divided main injection, the fuel evaporation speed is less than the oxygen supply speed, or equivalent to the oxygen supply speed. Therefore, an insufficient oxygen amount in the combustion field relative to the fuel evaporation speed, which increases in an accelerated manner along with combustion in the combustion field, is avoided (a breakdown in equilibrium between the fuel evaporation speed and the oxygen supply speed is avoided), and so it is possible to suppress the occurrence of smoke due to the preceding divided main injection.

Also, likewise for the subsequent divided main injection, the end timing of the subsequent divided main injection is set to a time such that the fuel evaporation speed does not become greater than the oxygen supply speed in the combustion field where that fuel is being supplied. Therefore, when executing main injection in a divided manner, the injection mode in the respective instances of divided main injection can each be realized as modes in which the occurrence of smoke can be avoided, so the occurrence of smoke due to main injection can be effectively prevented.

Specifically, the end timing of divided main injection in this case is set so as to adopt a fuel injection amount where smoke does not occur in the combustion field. That is, there is a correlation between the injection period of divided main injection and the fuel injection amount during this divided main injection, so if the end timing after starting of divided main injection is prescribed (that is, if the injection period of divided main injection is prescribed), the fuel injection amount during divided main injection also is prescribed. Also, by prescribing the end timing of divided main injection to obtain a fuel injection amount such that the fuel evaporation speed does not become greater than the oxygen supply speed, it is possible to prevent the occurrence of smoke due to main injection.

The fuel injection amount in divided main injection (subsequent divided main injection) executed after the preceding divided main injection is prescribed as follows. That is, when executing a next instance of divided main injection after temporarily stopping divided main injection (preceding divided main injection), fuel injection of a fuel injection amount where smoke does not occur is executed toward the combustion field where the fuel evaporation speed is less than the oxygen supply speed.

By prescribing the fuel injection amount in the subsequent divided main injection in this way, the occurrence of smoke due to this divided main injection also is avoided, and so it is possible to prevent the occurrence of smoke due to main injection. Note that in the fuel injection period of this subsequent divided main injection, because the preceding divided main injection has been executed, a nearby combustion field also consumes much oxygen when the temperature is increased. Therefore, the amount of fuel injection that is possible in the subsequent divided main injection (the fuel injection amount where smoke is not generated: an allowable injection amount) is a small value relative to the fuel injection amount that was possible in the preceding divided main injection.

Following is given another example of solving means for attaining the above aim. Specifically, this solving means presumes a fuel injection control apparatus of a compression self-igniting internal combustion engine that has a fuel injection valve with a multidirectional injection nozzle facing a combustion chamber, and that is capable of executing main injection with an injection pattern of the fuel injection valve being a plurality of instances of divided main injection. A gas of a combustion field where fuel is supplied by execution of the divided main injection moves in a circumferential direction within a cylinder according to a swirl flow within the cylinder. Also, divided main injection control means is provided that stops, when executing an initial divided main injection, the divided main injection before an evaporation speed of fuel injected in the divided main injection becomes greater than an oxygen supply speed in a combustion field where the fuel is being supplied, continues the stopped state of divided main injection during a time period prior to when, in movement of the combustion field that was formed by this initial divided main injection in the circumferential direction within the cylinder according to the swirl flow, the combustion field where the evaporation speed of this fuel is less than the oxygen supply speed moves to a position facing the multidirectional injection nozzle, and thereafter, executes a next divided main injection at the time when the combustion field where the evaporation speed of this fuel is less than the oxygen supply speed has arrived at the position facing the multidirectional injection nozzle.

According to this specific aspect, spray (in a gaseous state) of fuel that was injected in the initial divided main injection flows within the cylinder in the circumferential direction according to the swirl flow. That is, the fuel spray moves to a region that does not face the injection nozzle of the fuel injection valve. Also, combustion proceeds in the combustion field where fuel that was injected in the initial divided main injection exists, so the fuel evaporation speed progressively increases and the oxygen supply speed progressively decreases. On the other hand, in a region between combustion fields, that is, in a region where fuel from the initial divided main injection does not exist, a high oxygen supply speed is maintained, and this region also flows within the cylinder in the circumferential direction according to the swirl flow. Also, this divided main injection is stopped before the fuel evaporation speed becomes greater than the oxygen supply speed in the combustion field where fuel was injected in the initial divided main injection. Therefore, smoke due to initial divided main injection does not occur. Also, the next instance of divided main injection is executed at the time when the region where the oxygen supply speed is high has moved to a position facing the injection nozzle of the fuel injection valve. Thus, fuel that was injected in this divided main injection is injected in a region where an adequate oxygen amount is ensured. Therefore, combustion is performed in this combustion field while obtaining an oxygen supply speed that is sufficiently high relative to the fuel evaporation speed, and so the occurrence of smoke is also suppressed in this subsequent divided main injection.

Also, a configuration is adopted in which, when auxiliary injection is executed prior to the main injection, the next divided main injection is executed so as to overlap a combustion field that has been formed by fuel that was injected by auxiliary injection from an injection nozzle positioned on an upstream side of the swirl flow, the combustion field having moved in the circumferential direction within the cylinder. In this case, in the next divided main injection (divided main injection subsequent to initial divided main injection), fuel is supplied to a combustion field where oxygen has been consumed by combustion of fuel that was injected in the auxiliary injection, but there is only a slight amount of the auxiliary injection. Accordingly, the penetration force is weak and spray flying distance is short, so although the combustion field overlaps with the initially injected portion of main injection, the majority of main injection is at a peripheral portion of auxiliary injection, and therefore there is no interference between the combustion field of auxiliary injection and the combustion field of main injection, and only a slight amount of oxygen is consumed by auxiliary injection. Accordingly, the next instance of divided main injection is executed for a combustion field where an adequate oxygen amount is still ensured, so smoke does not occur due to this divided main injection.

Also, an interval from an injection stop time of a preceding divided main injection to an injection start time of a subsequent divided main injection is set according to the shortest opening/closing period of the fuel injection valve.

### [Advantageous Effects of Invention]

In the present invention, a configuration is adopted in which, when executing main injection as a plurality of instances of divided main injection, an injection end timing of divided main injection is appropriately set, and thus the evaporation speed of fuel injected in divided main injection does not become greater than the oxygen supply speed in the combustion field where that fuel has been supplied. Therefore, it is possible to suppress occurrence of smoke in the combustion field, and a dramatic improvement in exhaust emissions can be attained.

### [Brief Description of Drawings]

[FIG. 1]

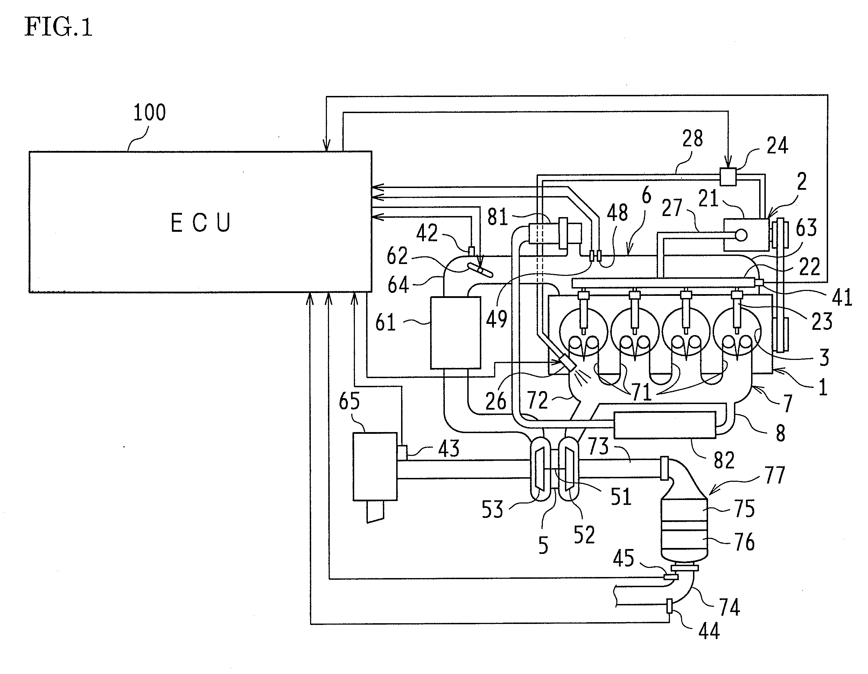

   FIG. 1 is a schematic configuration diagram of an engine and the control system thereof according to an embodiment.
[FIG. 2]

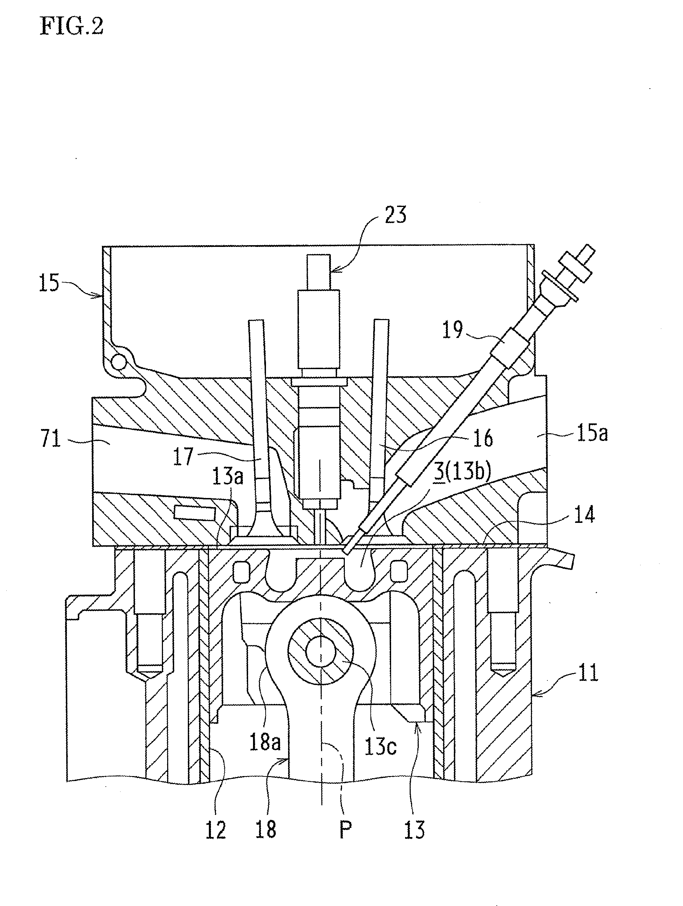

   FIG. 2 is a cross-sectional view showing the combustion chamber of a diesel engine and its surroundings.
[FIG. 3]

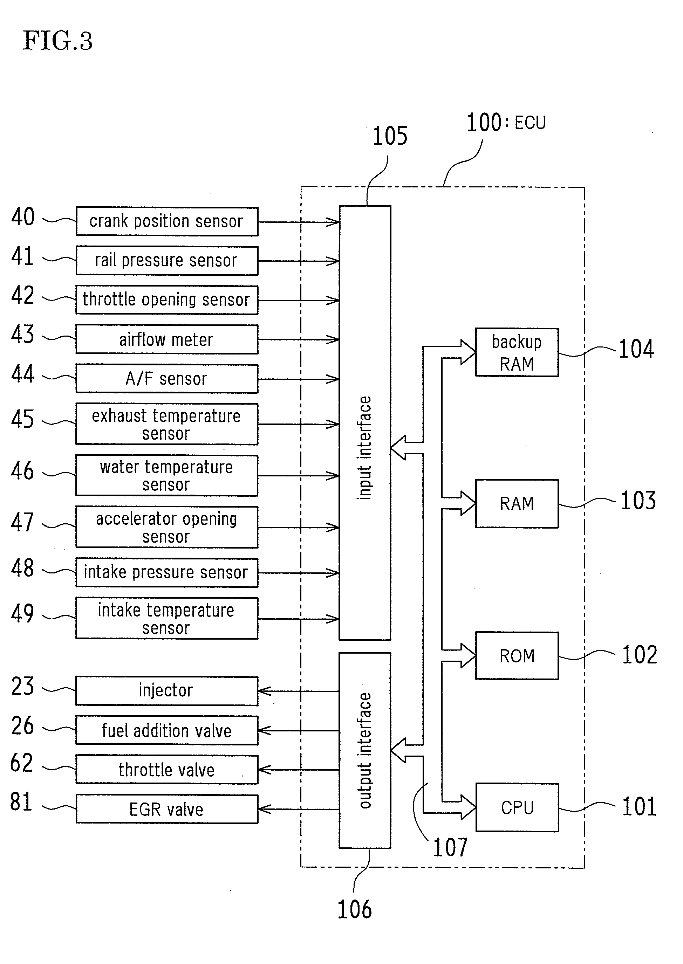

   FIG. 3 is a block diagram showing the configuration of a control system such as an ECU.
[FIG. 4]

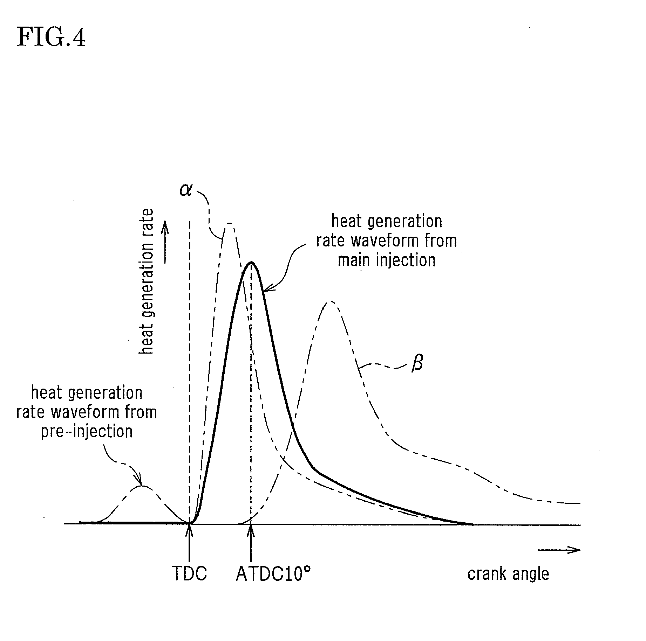

   FIG. 4 shows waveform charts showing changes in heat generation rate in an expansion stroke.
[FIG. 5]

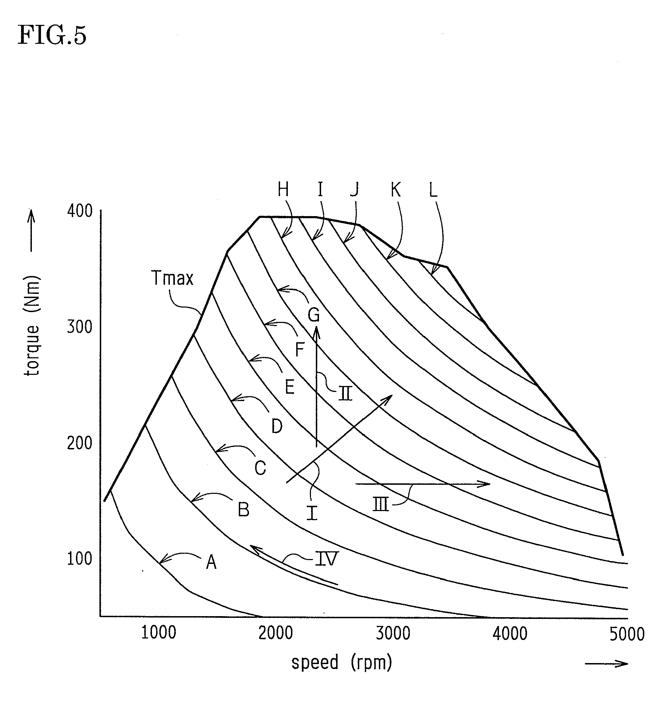

   FIG. 5 is a chart showing a fuel pressure setting map according to one embodiment that is referred to when a target fuel pressure is determined.
[FIG.6]

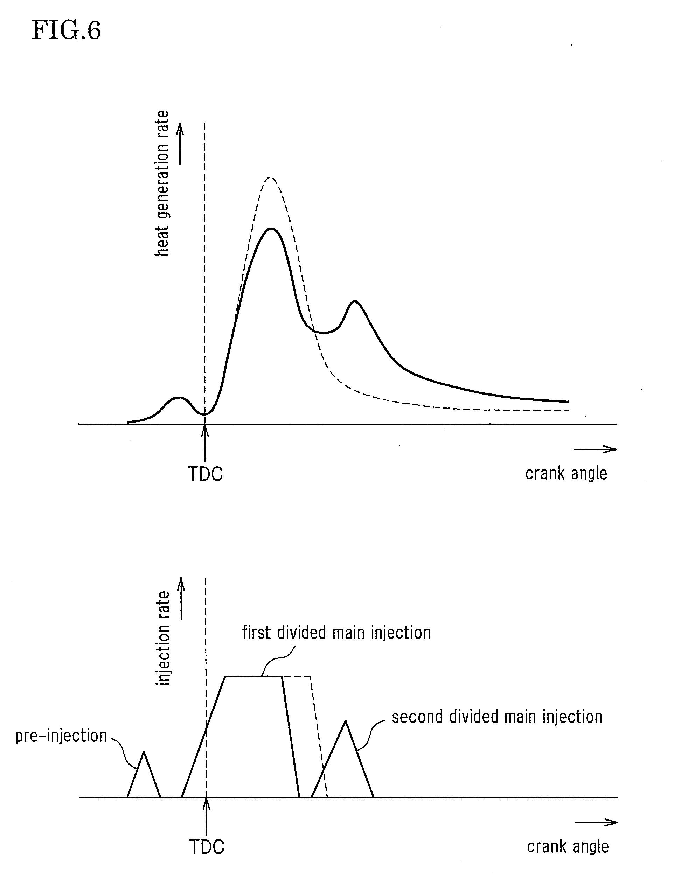

   FIG. 6 respectively shows changes in the heat generation rate in the combustion field and the fuel injection pattern during the period of execution of pre-injection and main injection.
[FIG. 7]

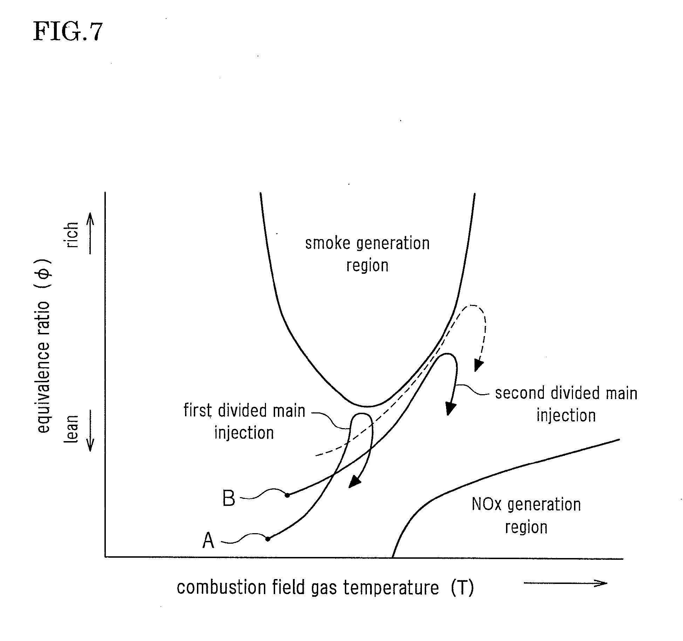

   FIG. 7 is a ϕT map that shows changes in the gas temperature and the equivalence ratio in the combustion field when each divided main injection is performed.
[FIG.8]

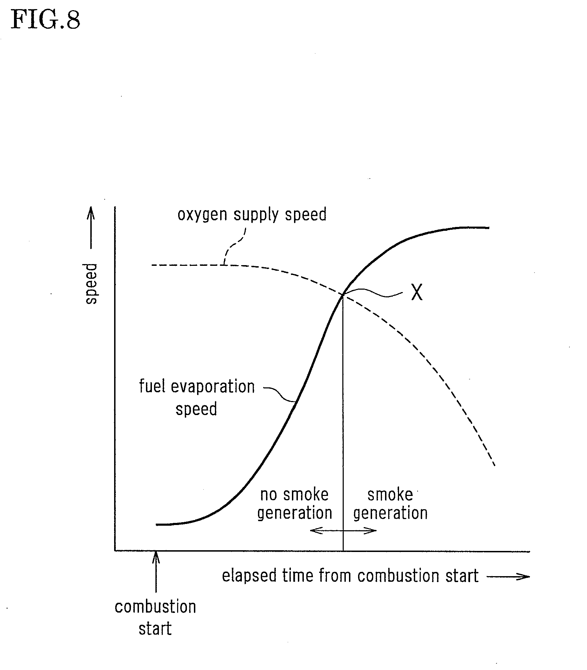

   FIG. 8 is a chart showing changes in the fuel evaporation speed and the oxygen supply speed in the combustion field.
[FIG. 9]

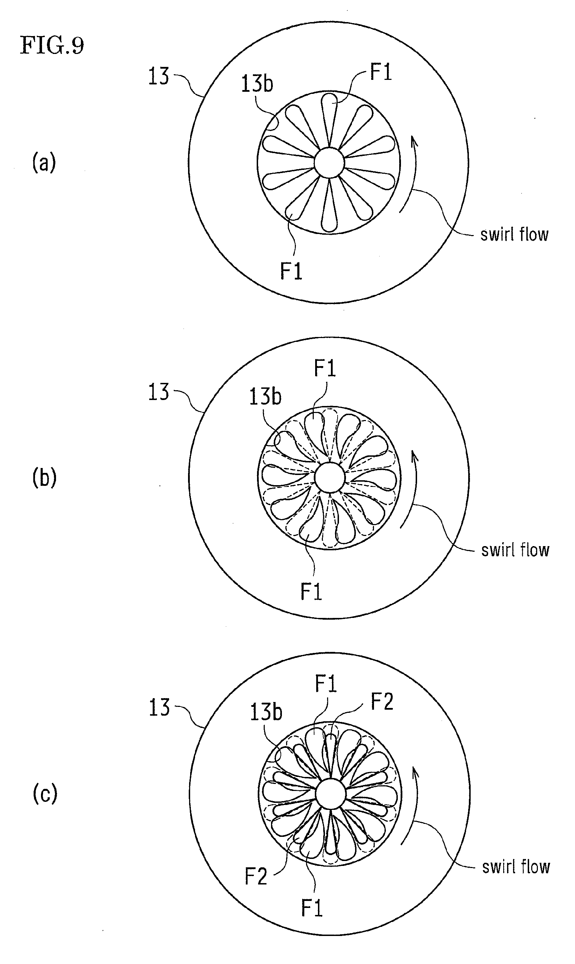

   FIG. 9 is a plan view that shows the state of the injection spray within the cylinder when the first divided main injection and the second divided main injection are performed.
[FIG. 10]

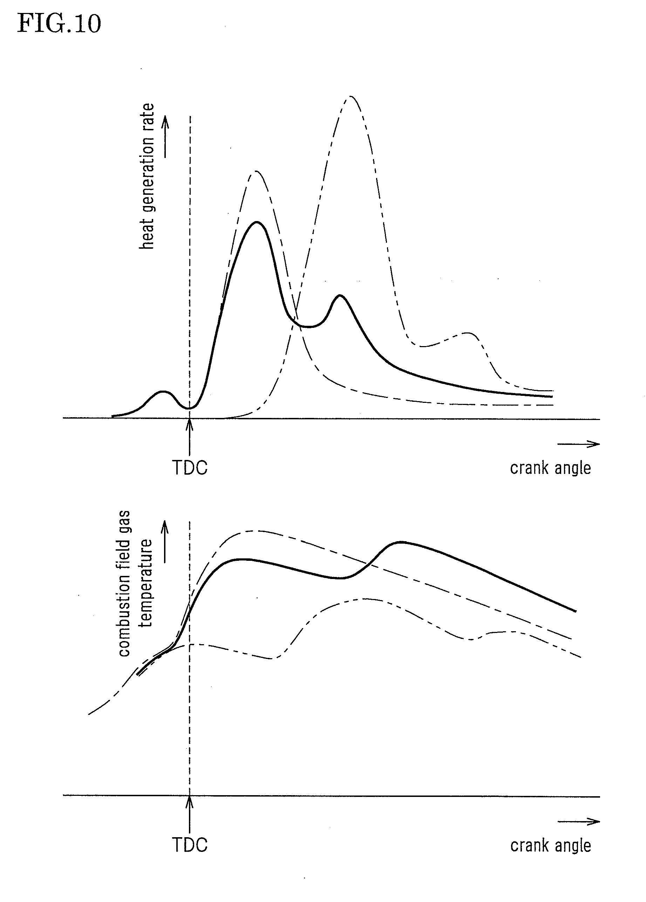

   FIG. 10 respectively shows changes in the heat generation rate and the gas temperature of the combustion field during a period of execution of the main injection.
[FIG. 11]

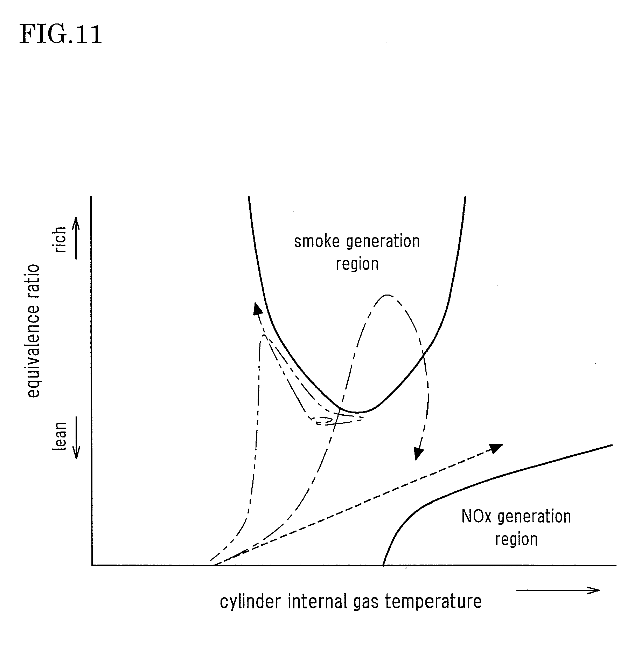

   FIG. 11 is a ϕT map that shows changes in the gas temperature and the equivalence ratio in the cylinder in a comparative example.

### [Explanation of Reference]

- 1: Engine (internal combustion engine)
- 23: Injector (fuel injection valve)
- 3: Combustion chamber

### [Best Mode for Carrying Out the Invention]

An embodiment of the invention is described below with reference to the drawings. In the present embodiment, a case will be described in which the invention is applied to a common rail in-cylinder direct injection multi-cylinder (for example, inline four-cylinder) diesel engine (compression self-igniting internal combustion engine) mounted in an automobile.

### - Engine configuration -

First, the overall configuration of a diesel engine (referred to below as simply the engine) according to the present embodiment will be described. FIG. 1 is a schematic configuration diagram of an engine 1 and a control system of the engine 1 according to the present embodiment. FIG. 2 is a cross-sectional view showing a combustion chamber 3 of the diesel engine and parts in the vicinity of the combustion chamber 3.

As shown in FIG. 1, the engine 1 according to the present embodiment is configured as a diesel engine system having a fuel supply system 2, combustion chambers 3, an intake system 6, an exhaust system 7, and the like as its main portions.

The fuel supply system 2 is provided with a supply pump 21, a common rail 22, injectors (fuel injection valves) 23, a cutoff valve 24, a fuel addition valve 26, an engine fuel path 27, an added fuel path 28, and the like.

The supply pump 21 draws fuel from a fuel tank, and after putting the drawn fuel under high pressure, supplies the fuel to the common rail 22 via the engine fuel path 27. The common rail 22 has a function as an accumulation chamber where the high pressure fuel supplied from the supply pump 21 is held (accumulated) at a specific pressure, and this accumulated fuel is distributed to each injector 23. The injectors 23 are configured from piezo injectors within which a piezoelectric element (piezo element) is provided, and supply fuel by injection into the combustion chambers 3 by appropriately opening a valve. The details of control of fuel injection from the injectors 23 will be described later.

Also, the supply pump 21 supplies part of the fuel drawn from the fuel tank to the fuel addition valve 26 via the added fuel path 28. In the added fuel path 28, the cutoff valve 24 is provided in order to stop fuel addition by cutting off the added fuel path 28 during an emergency.

The fuel addition valve 26 is configured from an electronically controlled opening/closing valve whose valve opening period is controlled with an addition control operation by an ECU 100 that will be described later such that the amount of fuel added to the exhaust system 7 becomes a target addition amount (an addition amount such that exhaust A/F becomes target A/F), or such that a fuel addition timing becomes a specific timing. In other words, a desired amount of fuel is supplied from the fuel addition valve 26 by injection to the exhaust system 7 (to an exhaust manifold 72 from exhaust ports 71) at a suitable timing.

The intake system 6 is provided with an intake manifold 63 connected to an intake port 15a formed in a cylinder head 15 (see FIG. 2), and an intake pipe 64 that constitutes an intake path is connected to the intake manifold 63. Also, in this intake path, an air cleaner 65, an airflow meter 43, and a throttle valve 62 are disposed in order from the upstream side. The airflow meter 43 outputs an electrical signal according to the amount of air that flows into the intake path via the air cleaner 65.

The exhaust system 7 is provided with the exhaust manifold 72 connected to the exhaust ports 71 formed in the cylinder head 15, and exhaust pipes 73 and 74 that constitute an exhaust path are connected to the exhaust manifold 72. Also, in this exhaust path a maniverter (exhaust purification apparatus) 77 is disposed that is provided with a NOx storage catalyst (NSR catalyst: NOx storage reduction catalyst) 75 and a diesel particulate-NOx reduction catalyst (DPNR catalyst) 76. Hereinafter, this NSR catalyst 75 and DPNR catalyst 76 will be described.

The NSR catalyst 75 is a storage reduction NOx catalyst and is configured using, for example, alumina (Al₂O₃) as a support, with, for example, an alkali metal such as potassium (K), sodium (Na), lithium (Li), or cesium (Cs), an alkaline earth element such as barium (Ba) or calcium (Ca), a rare earth element such as lanthanum (La) or yttrium (Y), and a precious metal such as platinum (Pt) supported on this support.

The NSR catalyst 75, in a state in which a large amount of oxygen is present in exhaust gas, stores NOx, and in a state in which the oxygen concentration in exhaust gas is low and a large amount of reduction component (for example, an unburned component of fuel (HC)) is present, reduces NOx to NO₂ or NO and releases the resulting NO₂ or NO. NOx that has been released as NO₂ or NO is further reduced due to quickly reacting with HC or CO in exhaust gas and becomes N₂. Also, by reducing NO₂ or NO, HC and CO themselves are oxidized and thus become H₂O and CO₂. In other words, by suitably adjusting the oxygen concentration or the HC component in exhaust gas introduced into the NSR catalyst 75, it is possible to purify HC, CO, and NOx in the exhaust gas. In the configuration of the present embodiment, adjustment of the oxygen concentration or the HC component in exhaust gas can be performed with an operation to add fuel from the fuel addition valve 26.

On the other hand, in the DPNR catalyst 76, a NOx storage reduction catalyst is supported on a porous ceramic structure, for example, and PM in exhaust gas is captured while passing through a porous wall. When the air-fuel ratio of the exhaust gas is lean, NOx in the exhaust gas is stored in the NOx storage reduction catalyst, and when the air-fuel ratio is rich, the stored NOx is reduced and released. Furthermore, a catalyst that oxidizes/burns the captured PM (for example, an oxidization catalyst whose main component is a precious metal such as platinum) is supported on the DPNR catalyst 76.

Here, the combustion chamber 3 of the diesel engine and parts in the vicinity of the combustion chamber 3 will be described with reference to FIG. 2. As shown in FIG. 2, in a cylinder block 11 that constitutes part of the engine, a cylindrical cylinder bore 12 is formed in each cylinder (each of four cylinders), and a piston 13 is housed within each cylinder bore 12 such that the piston 13 can slide in the vertical directions.

The combustion chamber 3 is formed on the top side of a top face 13a of the piston 13. In other words, the combustion chamber 3 is defined by a lower face of the cylinder head 15 installed on top of the cylinder block 11 via a gasket 14, an inner wall face of the cylinder bore 12, and the top face 13a of the piston 13. A cavity (recess) 13b is provided in substantially the center of the top face 13a of the piston 13, and this cavity 13b also constitutes part of the combustion chamber 3.

A small end 18a of a connecting rod 18 is linked to the piston 13 by a piston pin 13c, and a large end of the connecting rod 18 is linked to a crankshaft that is an engine output shaft. Thus, back and forth movement of the piston 13 within the cylinder bore 12 is transmitted to the crankshaft via the connecting rod 18, and engine output is obtained due to rotation of this crank shaft. Also, a glow plug 19 is disposed facing the combustion chamber 3. The glow plug 19 glows due to the flow of electrical current immediately before the engine 1 is started, and functions as a starting assistance apparatus whereby ignition and combustion are promoted due to part of a fuel spray being blown onto the glow plug.

In the cylinder head 15, the intake port 15a that introduces air into the combustion chamber 3 and the exhaust port 71 that discharges exhaust gas from the combustion chamber 3 are formed, and an intake valve 16 that opens/closes the intake port 15a and an exhaust valve 17 that opens/closes the exhaust port 71 are disposed. The intake valve 16 and the exhaust valve 17 are disposed facing each other on either side of a cylinder center line P. That is, this engine 1 is configured as a cross flow-type engine. Also, the injector 23 that injects fuel directly into the combustion chamber 3 is installed in the cylinder head 15. The injector 23 is disposed substantially in the center above the combustion chamber 3, in an erect orientation along the cylinder center line P, and injects fuel introduced from the common rail 22 toward the combustion chamber 3 at a specific timing.

Furthermore, as shown in FIG. 1, the engine 1 is provided with a turbocharger 5. This turbocharger 5 is equipped with a turbine wheel 52 and a compressor wheel 53 that are linked via a turbine shaft 51. The compressor wheel 53 is disposed facing the inside of the intake pipe 64, and the turbine wheel 52 is disposed facing the inside of the exhaust pipe 73. Thus the turbocharger 5 uses exhaust flow (exhaust pressure) received by the turbine wheel 52 to rotate the compressor wheel 53, thereby performing a so-called supercharging operation that increases the intake pressure. In this embodiment, the turbocharger 5 is a variable nozzle-type turbocharger, in which a variable nozzle vane mechanism (not shown) is provided on the turbine wheel 52 side, and by adjusting the opening of this variable nozzle vane mechanism it is possible to adjust the supercharging pressure of the engine 1.

An intercooler 61 for forcibly cooling intake air heated due to supercharging with the turbocharger 5 is provided in the intake pipe 64 of the intake system 6. The throttle valve 62 provided on the downstream side from the intercooler 61 is an electronically controlled opening/closing valve whose opening is capable of stepless adjustment, and has a function to constrict the area of the channel of intake air under specific conditions, and thus adjust (reduce) the amount of intake air supplied.

Also, the engine 1 is provided with an exhaust gas recirculation path (EGR path) 8 that connects the intake system 6 and the exhaust system 7. The EGR path 8 decreases the combustion temperature by appropriately directing part of the exhaust gas back to the intake system 6 and resupplying that exhaust gas to the combustion chamber 3, thus reducing the amount of NOx generated. Also, provided in the EGR path 8 are an EGR valve 81 that by being opened/closed steplessly under electronic control is capable of freely adjusting the flow rate of exhaust gas that flows through the EGR path 8, and an EGR cooler 82 for cooling exhaust that passes through (recirculates through) the EGR path 8.

### - Sensors -

Various sensors are installed at respective sites of the engine 1, and these sensors output signals related to environmental conditions at the respective sites and the operating state of the engine 1.

For example, the airflow meter 43 outputs a detection signal according to the flow rate of intake air (the amount of intake air) on the upstream side of the throttle valve 62 within the intake system 6. An intake temperature sensor 49 is disposed in the intake manifold 63 and outputs a detection signal according to the temperature of intake air. An intake pressure sensor 48 is disposed in the intake manifold 63 and outputs a detection signal according to the intake air pressure. An A/F (air-fuel ratio) sensor 44 outputs a detection signal that continuously changes according to the oxygen concentration in exhaust gas on the downstream side of the maniverter 77 of the exhaust system 7. An exhaust temperature sensor 45 likewise outputs a detection signal according to the temperature of exhaust gas (exhaust temperature) on the downstream side of the maniverter 77 of the exhaust system 7. A rail pressure sensor 41 outputs a detection signal according to the pressure of fuel accumulated in the common rail 22. A throttle opening sensor 42 detects the opening of the throttle valve 62.

### -ECU-

As shown in FIG. 3, the ECU 100 is provided with a CPU 101, a ROM 102, a RAM 103, a backup RAM 104, and the like. In the ROM 102, various control programs, maps that are referred to when executing those various control programs, and the like are stored. The CPU 101 executes various computational processes based on the various control programs and maps stored in the ROM 102. The RAM 103 is a memory that temporarily stores data resulting from computation with the CPU 101 or data that has been input from the respective sensors. The backup RAM 104 is a nonvolatile memory that stores that data or the like to be saved when the engine 1 is stopped, for example.

The CPU 101, the ROM 102, the RAM 103, and the backup RAM 104 are connected to each other via a bus 107, and are connected to an input interface 105 and an output interface 106 via the bus 107.

The input interface 105 is connected to the rail pressure sensor 41, the throttle position sensor 42, the airflow meter 43, the A/F sensor 44, the exhaust temperature sensor 45, the intake pressure sensor 48, and the intake temperature sensor 49. Furthermore, the input interface 105 is connected to a water temperature sensor 46 that outputs a detection signal according to the coolant temperature of the engine 1, an accelerator position sensor 47 that outputs a detection signal according to the amount of accelerator pedal depression, a crank position sensor 40 that outputs a detection signal (pulse) each time the output shaft (crankshaft) of the engine 1 rotates a specific angle, and the like. On the other hand, the output interface 106 is connected to the injectors 23, the fuel addition valve 26, the throttle valve 62, the EGR valve 81, and the like.

The ECU 100 executes various control of the engine 1 based on the output of the various sensors as described above. Furthermore, the ECU 100 manages pilot injection, pre-injection, main injection, after-injection, and post-injection, all of which will be described later, as control of fuel injection by the injectors 23.

### - Mode of fuel injection -

Following is a general description of the operation of pilot injection, pre-injection, main injection, after-injection, and post-injection in the present embodiment.

### (Pilot injection)

Pilot injection is an injection operation in which a small amount of fuel is injected in advance from the injectors 23 prior to main injection. More specifically, it is a fuel injection operation performed to sufficiently increase the temperature of compressed gas (temperature in a cylinder) so as to reach the self-ignition temperature during a period from execution of this pilot injection through the temporary interruption of the fuel injection to the start of the main injection, thereby ensuring the good ignition characteristics of the fuel injected during the main injection. That is, the function of the pilot injection in this embodiment is solely for preheating the inside of a cylinder. In other words, the pilot injection in this embodiment is an injection operation for preheating gas within the combustion chamber 3 (operation of supplying fuel for preheating).

Specifically, in order to achieve an appropriate spray distribution and local concentration, the injection amount per instance in pilot injection is set to a minimum limit injection amount (for example, 1.5 mm³) and the number of injections is set, and thus the necessary total pilot injection amount is ensured. The interval of pilot injections that are performed in such a divided manner is determined according to the responsiveness (speed of opening/closing operation) of the injectors 23. This interval is set to 200 µs, for example. Moreover, the injection start timing for pilot injection is set, for example, at a crank angle of 80° or thereafter before the compression top dead center (BTDC) of the piston 13. The injection amount per instance, the interval, and the injection start timing of pilot injection are not limited to the values given above.

### (Pre-injection)

Pre-injection is an injection operation in which a small amount of fuel is injected in advance from the injectors 23 prior to main injection. Pre-injection is an injection operation for suppressing fuel ignition delay in main injection and for leading to stable diffusion combustion, and is also called auxiliary injection. Also, the pre-injection of the present embodiment not only has the function to slow the initial combustion speed in the aforementioned main injection, but also has the preheating function to increase the temperature within a cylinder.

Specifically, in the present embodiment, the pre-injection amount is set to, for example, 10% of the total fuel injection amount (the sum of the injection amount in pre-injection and the injection amount in main injection) for obtaining the required torque determined according to the operating state, such as the engine speed, the amount of accelerator operation, the coolant temperature, and the intake air temperature. This proportion of the pre-injection amount relative to the total fuel injection amount is set according to, for example, the amount of heat required for preheating the inside of a cylinder.

In this case, if the total amount of fuel to be injected is less than 15 mm³, the injection amount in pre-injection is less than the minimum limit injection amount for the injectors 23 (1.5 mm³), so pre-injection is not executed. Note that, in this case, merely the minimum limit injection amount (1.5 mm³) of fuel for the injectors 23 may be injected in pre-injection. On the other hand, if the total injection amount in pre-injection is required to be greater than or equal to two times the minimum limit injection amount for the injectors 23 (e.g., 3 mm³ or greater), the total injection amount necessary in this pre-injection is ensured by performing pre-injection a plurality of times. Thus, fuel ignition delay in main injection can be suppressed, and the initial combustion speed in the main injectionor is reliably slowed, thus leading to stable diffusion combustion.

### (Successive combustion)

As described above, sufficient preheating within a cylinder is performed in the present embodiment by pilot injection and pre-injection. Due to this preheating, when main injection that will be described later is started, fuel injected in main injection undergoes thermal decomposition by being immediately exposed to a temperature environment having a temperature no less than the self-igniting temperature, and combustion starts immediately after injection.

Specifically, fuel ignition delay in a diesel engine includes physical delay and chemical delay. Physical delay refers to the time it takes fuel droplets to evaporate/mix, and depends on the gas temperature in the combustion field. On the other hand, chemical delay refers to the time it takes fuel vapor to chemically bond/decompose and to oxidatively generate heat. In a condition in which preheating of a cylinder is sufficient as described above, such physical delay is minimized, and as a result, ignition delay also is minimized.

Therefore, the combustion of fuel injected in main injection is barely executed in the form of premixed combustion. As a result, the control of fuel injection timing substantially serves as the control of combustion timing, and it is thus possible to significantly improve combustion controllability. In other words, the combustion of a diesel engine heretofore is largely executed in the form of premixed combustion, but in the present embodiment, minimizing premixed combustion enables combustion controllability to be significantly improved through the control of a heat generation rate waveform (the ignition timing and the amount of heat generated) achieved by controlling the fuel injection timing and the amount of fuel injected (by controlling the injection rate waveform). In the present embodiment, this novel form of combustion is referred to as "successive combustion (combustion that immediately starts after fuel injection)" or "controlled combustion (combustion actively controlled by the fuel injection timing and the amount of fuel injected)."

### (Main injection)

Main injection is an injection operation for generating torque of the engine 1 (operation of supplying fuel for torque generation). In the present embodiment, an injection amount is set that is obtained by subtracting the injection amount in the above-described pre-injection from the above-described total amount of fuel injected for obtaining the required torque determined according to the operating state, such as the engine speed, the amount of accelerator operation, the coolant temperature, and the intake air temperature.

Here is a brief description of a control process for the pre-injection and the main injection described above.

First, regarding a torque requirement value of the engine 1, a sum of the injection amount in the pre-injection and the injection amount in the main injection is obtained as the total amount of fuel to be injected. In other words, the total amount of fuel to be injected is calculated as an amount for generating torque required of the engine 1.

The torque requirement value of the engine 1 is determined according to the operating state, such as the engine speed, amount of accelerator operation, coolant temperature, and intake air temperature, and according to the status of use of accessories and the like. For example, the greater the engine speed (engine speed calculated based on the value detected by the crank position sensor 40) or the greater the amount of accelerator operation (the amount of accelerator pedal depressed detected by the accelerator position sensor 47) (the greater the accelerator opening), the greater the resulting torque requirement value of the engine 1.

After the total amount of fuel to be injected has been calculated in this way, a ratio (division ratio) of the injection amount in the pre-injection to this total amount of fuel to be injected is set. In other words, the pre-injection amount is set as an amount obtained by dividing the total amount of fuel to be injected using the aforementioned division ratio. This division ratio (pre-injection amount) is obtained as a value at which "suppression of fuel ignition delay in main injection" and "keeping the heat generation rate peak value of combustion in main injection low" are both achieved simultaneously. With these two types of suppression, it is possible to achieve a reduction in combustion noise and a reduction in the amount of NOx generated, while also ensuring high engine torque. Note that, in the present embodiment, the division ratio is set to 10%.

### (After-injection)

After-injection is an injection operation for increasing the exhaust gas temperature. Specifically, in the present embodiment, after-injection is executed at a timing such that the majority of the combustion energy of fuel supplied by this after-injection is obtained as exhaust heat energy instead of being converted into engine torque. Also, in this after-injection as well, in the same way as the case of the pilot injection described above, the minimum injection rate is set (for example, an injection amount of 1.5 mm³ per instance), and the total after-injection amount necessary in this after-injection is ensured by executing after-injection a plurality of times.

### (Post-injection)

Post-injection is an injection operation for increasing the temperature of the aforementioned maniverter 77 by directly introducing fuel into the exhaust system 7. For example, when the amount of PM captured by and deposited in the DPNR catalyst 76 has exceeded a specific amount (for example, indicated from detection of a before/after pressure difference of the maniverter 77), post-injection is executed.

### - Fuel injection pressure -

The fuel injection pressure when executing each of the above-described fuel injections is determined based on the internal pressure of the common rail 22. In regard to the internal pressure of the common rail, normally, the higher the engine load and the greater the engine speed, the greater the target value for the pressure of fuel supplied from the common rail 22 to the injectors 23 (i.e., the target rail pressure). In other words, when the engine load is high, a large amount of air is drawn into the combustion chamber 3, making it necessary to inject a large amount of fuel into the combustion chamber 3 from the injectors 23, and therefore the pressure of injection from the injectors 23 needs to be high. Also, when the engine speed is high, the period during which injection is possible is short, making it necessary to inject a large amount of fuel per unit time, and therefore the pressure of injection from the injectors 23 needs to be high. In this way, the target rail pressure is normally set based on the engine load and the engine speed. A specific method of setting this fuel pressure target value will be described below.

The optimum values of fuel injection parameters for fuel injection such as the pilot injection and the main injection described above differ according to the temperature conditions of the engine 1, intake air, and the like.

For example, the ECU 100 adjusts the amount of fuel discharged by the supply pump 21 such that the common rail pressure becomes the same as the target rail pressure set based on the engine operating state, i.e., such that the fuel injection pressure matches the target injection pressure. Also, the ECU 100 determines the amount of fuel to be injected and the form of fuel injection based on the engine operating state. Specifically, the ECU 100 calculates the engine speed based on the value detected by the crank position sensor 40 and obtains the amount of accelerator pedal depression (accelerator position) based on the value detected by the accelerator position sensor 47, and then determines the total amount of fuel to be injected (the sum of the injection amount in pre-injection and the injection amount in main injection) based on the engine speed and the accelerator position.

### - Technique for setting target fuel pressure -

The following describes the technical idea in setting a target fuel pressure in the present embodiment.

### (Basic technique for setting target fuel pressure)

In the diesel engine 1, it is important to simultaneously satisfy demands such as improving exhaust emissions by decreasing the amount of NOx generated, reducing combustion noise during a combustion stroke, and ensuring sufficient engine torque. The present inventors, noting that as a method of simultaneously satisfying such demands, it is effective to suitably control the state of change in heat generation rate within a cylinder during a combustion stroke (state of change expressed by a heat generation rate waveform), established the method of setting a target fuel pressure described below as a method of controlling the state of change in heat generation rate.

In the heat generation rate waveform shown in FIG. 4, the horizontal axis represents the crank angle, the vertical axis represents heat generation rate, and the solid line indicates an ideal heat generation rate waveform regarding the combustion of fuel injected in main injection. In FIG. 4, for easier understanding, a heat generation rate waveform for one fuel injection in main injection is presented (when multiple divided injections are performed in main injection, this figure is for the first divided injection of main injection). In the figure, "TDC" indicates a crank angle position corresponding to the compression top dead center of the piston 13. In this heat generation rate waveform, for example, the combustion of fuel injected in main injection is started when the piston 13 is at the compression top dead center (TDC), heat generation rate reaches its maximum value (peak value) at a specific piston position after the compression top dead center (e.g., a point 10° after the compression top dead center (10° ATDC)), and furthermore the combustion of fuel injected in main injection ends at another specific piston position after the compression top dead center (e.g., a point 25° after the compression top dead center (25° ATDC)). In order for combustion to end no later than this point, in the present embodiment, the injection of fuel in main injection is ended no later than 22° after the compression top dead center (22° ATDC). Executing the combustion of an air-fuel mixture in this state of change in heat generation rate creates a situation where the combustion of 50% of the air-fuel mixture present in a cylinder is complete at 10° after the compression top dead center (10° ATDC). In other words, about 50% of the total amount of heat generated in an expansion stroke is generated no later than 10° ATDC, and the engine 1 can be operated with high thermal efficiency.

The waveform indicated by the dashed single-dotted line in FIG. 4 is a heat generation rate waveform for combustion of fuel that is injected in pre-injection. Accordingly, stable successive combustion of fuel injected in main injection is attained. For example, an amount of heat of 10 J is generated by combustion of fuel injected in this pre-injection. This amount is not limited to the value in this embodiment. For example, this amount is suitably determined according to the aforementioned total amount of fuel to be injected. Also, although not shown, pilot injection is performed prior to pre-injection, and thus the temperature within the cylinder is sufficiently increased so that ignition of fuel injected in main injection is well-ensured.

Also, the waveform indicated by a dashed double-dotted line α in FIG. 4 is a heat generation rate waveform created when the fuel injection pressure is set higher than the appropriate value. The combustion speed and the peak value are both excessively high, and there is concern regarding an increase in combustion noise and the amount of NOx generated. On the other hand, the waveform indicated by a dashed double-dotted line β in FIG. 4 is a heat generation rate waveform created when the fuel injection pressure is set lower than the appropriate value. The combustion speed is low and the timing at which the peak appears is shifted toward the angle of delay side to a large extent, and there is concern that sufficient engine torque may not be attained.

As described above, the technique for setting a target fuel pressure according to the present embodiment is based on a technical idea that combustion efficiency is improved by optimizing the state of change in heat generation rate (optimizing the heat generation rate waveform). In order to achieve this, a target fuel pressure is set according to a fuel pressure setting map as described below.

### (Fuel pressure setting map)

FIG. 5 is a fuel pressure setting map that is referred to when the target fuel pressure is determined in the present embodiment. This fuel pressure setting map is stored in, for example, the ROM 102. Also, in this fuel pressure setting map, the horizontal axis denotes the engine speed and the vertical axis denotes the engine torque. Tmax in FIG. 5 denotes the maximum torque line.

As a feature of this fuel pressure setting map, the equal-fuel injection pressure lines denoted by A to L in the figure (equal-fuel injection pressure regions) are allocated to equal power lines (equal-output regions) of the output (power) determined from the speed and the torque of the engine 1. In other words, this fuel pressure setting map is set such that the equal-power lines and the equal-fuel injection pressure lines substantially match.

Control of the valve opening period (injection rate waveform) of the injectors 23 through determining the fuel pressure according to this fuel pressure setting map allows the amount of fuel injected during the valve opening period to be specified, and it is thus possible to simplify and optimize the control of the amount of fuel injected.

Specifically, the curved line A in FIG. 5 is a line representing an engine output of 10 kW, and a line representing a fuel injection pressure of 30 MPa is allocated to this. Similarly, the curved line B is a line representing an engine output of 20 kW, and a line representing a fuel injection pressure of 45 MPa is allocated to this. The curved line C is a line representing an engine output of 30 kW, and a line representing a fuel injection pressure of 60 MPa is allocated to this. The curved line D is a line representing an engine output of 40 kW, and a line representing a fuel injection pressure of 75 MPa is allocated to this. The curved line E is a line representing an engine output of 50 kW, and a line representing a fuel injection pressure of 90 MPa is allocated to this. The curved line F is a line representing an engine output of 60 kW, and a line representing a fuel injection pressure of 105 MPa is allocated to this. The curved line G is a line representing an engine output of 70 kW, and a line of a fuel injection pressure of 120 MPa is allocated to this. The curved line H is a line representing an engine output of 80 kW, and a line of a fuel injection pressure of 135 MPa is allocated to this. The curved line I is a line representing an engine output of 90 kW, and a line representing a fuel injection pressure of 150 MPa is allocated to this. The curved line J is a line representing an engine output of 100 kW, and a line representing a fuel injection pressure of 165 MPa is allocated to this. The curved line K is a line representing an engine output of 110 kW, and a line representing a fuel injection pressure of 180 MPa is allocated to this line. The curved line L is a line representing an engine output of 120 kW, and a line representing a fuel injection pressure of 200 MPa is allocated to this. The output and the pressure are not limited to these values, and are suitably set according to the performance characteristics of the engine 1.

Moreover, the lines A to L above are set such that the lower the engine speed, the smaller the extent of the change in fuel injection pressure relative to the change in engine output. That is, the space between the lines is broader at low engine speeds than at high engine speeds. The space between the lines may be set evenly.

According to the fuel pressure setting map so prepared, a target fuel pressure that is suitable for the operation state of the engine 1 is set, and the supply pump 21 and the like are controlled accordingly.

Specifically, the fuel injection pressure is increased when the engine speed and the engine torque are both increased (see arrow I in FIG. 5), when the engine torque is increased while the engine speed remains constant (see arrow II in FIG. 5), and when the engine speed is increased while the engine torque remains constant (see arrow III in FIG. 5). Thus, the amount of fuel to be injected that is suitable relative to the amount of intake air in the case where the engine torque (engine load) is high can be ensured, and the necessary amount of fuel to be injected in the case where the engine speed is high can be ensured within a short period of time by increasing the amount of injected per unit time. Therefore, it is always possible to achieve a mode of combustion that is represented by the ideal heat generation rate waveform indicated by the solid line in FIG. 4 regardless of the engine output or the engine speed, thereby enabling demands such as improving exhaust emissions by decreasing the amount of NOx generated, reducing combustion noise during an expansion stroke, and ensuring sufficient engine torque to be satisfied simultaneously.

Meanwhile, when the engine output does not change even after the engine speed and the engine torque are changed (see arrow IV in FIG. 5, for example), the previously set appropriate fuel injection pressure value is maintained without changing the fuel injection pressure. In other words, the fuel injection pressure is not changed when the state of engine operation changes along the equal-fuel injection pressure line (matching the equal-power line), and the mode of combustion that is represented by the aforementioned ideal heat generation rate waveform is maintained. In this case, demands such as improving exhaust emissions by decreasing the amount of NOx generated, reducing combustion noise during an expansion stroke, and ensuring sufficient engine torque can be simultaneously satisfied continuously.

As described above, according to the fuel pressure setting map of the present embodiment, there is an unambiguous correlation between the output (power) and the fuel injection pressure (common rail pressure) of the engine 1, and in a situation where the engine output is changed due to the change of at least one of the engine speed and the engine torque, a fuel injection is executed at a correspondingly suitable fuel pressure, while in a situation where the engine output is not changed even after the engine speed or the engine torque are changed, the fuel pressure is maintained at the previously set appropriate value. This enables the state of change in heat generation rate to be brought close to the ideal state over the entire engine operation range. Moreover, specifying the fuel pressure in this way allows an unambiguous correlation to be provided between the valve opening period and the fuel injection of the injectors 23, and in order to attain a necessary injection amount, it is thus only necessary to specify the valve opening period of the injectors 23 during injection, thereby enhancing controllability. Furthermore, providing an unambiguous correlation between the output and the fuel injection pressure (common rail pressure) of the engine 1 as in this fuel pressure setting map establishes a systematic fuel pressure setting technique that is universally applicable to various engines, and it is thus possible to simplify the preparation of a fuel pressure setting map for setting a suitable fuel injection pressure according to the operation state of the engine 1.

### - Divided Main Injection -

In the present embodiment, by executing a plurality of instances of divided main injection as the injection mode of the above main injection, a total main injection amount necessary in this main injection (an injection amount obtained by subtracting the injection amount in the above pre-injection from the above total fuel injection amount for obtaining the required torque) is ensured. The injection timing and the fuel injection amount of this divided main injection are features of the present embodiment. This is specifically described below.

FIG. 6 respectively shows changes in the heat generation rate in the cylinder and the fuel injection pattern during the period of execution of pre-injection and main injection in the present embodiment. FIG. 6 shows a case of executing two instances of divided main injection. FIG. 7 is a map (commonly referred to as a ϕT map) that shows changes in the gas temperature in a combustion field that is the region where fuel was injected in the combustion chamber 3 (for example, in the case of the injectors 23 having 10 injection nozzles, each of 10 combustion fields within the combustion chamber 3), and the equivalence ratio within that combustion field. That is, the arrows in FIG. 7 show changes in the combustion field environment (gas temperature and equivalence ratio of the combustion field) respectively in the combustion field of fuel that was injected in first divided main injection and the combustion field of fuel that was injected in second divided main injection, when main injection (instances of divided main injection) was executed with the fuel injection pattern shown in FIG. 6.

In FIG. 7, smoke occurs in the exhaust gas when the combustion field environment has reached a smoke generation region. This smoke generation region is a region where the combustion field gas temperature is comparatively high and the equivalence ratio of the combustion field is on the rich side. Also, NOx occurs in the exhaust gas when the combustion field environment has reached a NOx generation region. The NOx generation region is a region where the combustion field gas temperature is comparatively high and the equivalence ratio of the combustion field is on the lean side.

As shown in FIG. 6, pre-injection is executed on the angle of advance side relative to compression top dead center (TDC) of the piston 13 (the start timing and the end timing of pre-injection are set to the angle of advance side relative to compression top dead center of the piston 13).

Also, main injection is executed divided into first divided main injection, which is main injection on the angle of advance side, and second divided main injection, which is main injection on the angle of delay side. A predetermined interval is provided between the first divided main injection and the second divided main injection. That is, after the first divided main injection is executed, fuel injection is temporarily stopped (the injectors 23 are blocked), and after the predetermined interval has passed, the second divided main injection is started. Below, the respective instances of divided main injection and the interval between these instances of divided main injection will be described.

### (First Divided Main Injection)

In the first divided main injection, injected is started at a point slightly to the angle of advance side from compression top dead center (TDC) of the piston 13, and injection is ended at a point slightly to the angle of delay side from compression top dead center of the piston 13. By starting the first divided main injection at this timing, as described above, combustion is realized with an ideal heat generation rate waveform in which combustion of fuel that was injected in the first divided main injection is started from the compression top dead center (TDC) of the piston 13.

Also, the injection period of this first divided main injection is set to a period such that after main injection has been started, this first divided main injection ends immediately before the evaporation speed of fuel injected in this first divided main injection becomes greater than the oxygen supply speed in the combustion field where that fuel is being supplied. Main injection is temporarily stopped at this timing (a divided main injection stoppage operation by divided main injection control means). That is, the injection period is set such that during execution of this first divided main injection, the evaporation speed of fuel in the combustion field does not become greater than the oxygen supply speed. For example, in the case of the engine 1 provided with the injectors 23 having 10 injection nozzles equally spaced in the circumferential direction, a period is set such that the first divided main injection ends without the fuel evaporation speed becoming greater than the oxygen supply speed at any of the 10 combustion fields within the combustion chamber 3.

Also, as described above, the fuel injection pressure (common rail pressure) is unambiguously determined relative to the output (power) of the engine 1 according to the above fuel pressure setting map, so according to the setting of the above injection period (open valve period of the injectors 23), the fuel injection amount injected during the injection period of the first divided main injection is also determined. As a result, by prescribing the end timing of the first divided main injection, the fuel injection amount of the first divided main injection is prescribed such that the evaporation speed of fuel in the combustion field does not become greater than the oxygen supply speed.

Thus, because the evaporation speed of fuel in the combustion field does not become greater than the oxygen supply speed during the injection period of the first divided main injection, smoke does not occur due to the fuel that was injected in this first divided main injection.

The reason for this is that, as described above, whether or not smoke caused by main injection occurs is more heavily dependent on the "fuel evaporation speed" and the "oxygen supply speed" in the combustion field within the cylinder (and is not influenced by the "fuel amount" and the "oxygen amount" existing in the combustion field). That is, when the "fuel evaporation speed" is greater than the "oxygen supply speed" in the combustion field, the amount of oxygen in the combustion field becomes inadequate (an oxygen-lacking state), so there is incomplete combustion of the premix within the cylinder, and thus smoke occurs. In the present embodiment, because the evaporation speed of fuel in the combustion field does not become greater than the oxygen supply speed during the injection period of the first divided main injection, incomplete combustion due to inadequate oxygen does not occur, so smoke does not occur due to this first divided main injection.

FIG. 8 shows changes in the "fuel evaporation speed" and the "oxygen supply speed" after combustion has started in the combustion field.

As shown in FIG. 8, at the initial time of combustion start in the combustion field, the temperature of the combustion field is low so the amount of fuel evaporation also is comparatively low. Therefore, the amount of heat generation is low, and increase in the temperature of the combustion field is also slow. Therefore, fuel evaporation speed is also low. Because the amount of fuel evaporation is low, the amount of oxygen consumed in order to produce a combustible air-fuel mixture (oxygen consumption amount) also is still low, so an adequate oxygen amount is ensured in the combustion field, and a high oxygen supply speed is obtained.

Afterward, when the temperature of the combustion field increases along with combustion of the combustible air-fuel mixture, the evaporation amount of fuel that received that heat energy also successively increases, and the temperature of the combustion field increases in an accelerated manner according to combustion of the combustible air-fuel mixture produced by that evaporated fuel. This is accompanied by an accelerated increase in the fuel evaporation speed. Due to the fuel evaporation speed increasing in this way, the oxygen consumption amount for producing the combustible air-fuel mixture also increases in an accelerated manner, and because the amount of oxygen relative to the amount of evaporated fuel successively decreases, the oxygen supply speed quickly decreases.

After reaching a point where the fuel evaporation speed and the oxygen supply speed are the same (point X in FIG. 8), the fuel evaporation speed becomes greater than the oxygen supply speed, and so smoke occurs. Accordingly, in the present embodiment, the injection end timing of the first divided main injection is set such that the first divided main injection ends before the point where the fuel evaporation speed and the oxygen supply speed are the same, in other words, set so as to establish a relationship (without a lack of oxygen) between the amounts of fuel and oxygen by prescribing a fuel evaporation speed that is no more than point X.

An example of the technique for obtaining such an injection end timing of the first divided main injection is described below. For example, first divided main injection is executed according to testing or simulation. For the injection amount at this time, a comparatively large value is adopted such that smoke occurs. Then, the heat generation rate waveform at this time is obtained. In this case, the heat generation rate increases with the passage of time. In a circumstance in which the oxygen supply speed is greater than the fuel evaporation speed, the amount of increase in the heat generation rate per unit time is kept approximately constant. That is, the heat generation rate waveform is approximately a straight line. Also, the oxygen supply speed and the fuel evaporation speed are approximately the same, and thereafter, when the fuel evaporation speed becomes greater than the oxygen supply speed, the amount of increase in the heat generation rate changes, so that the amount of increase in the heat generation rate per unit time decreases. That is, an inflection point occurs in the heat generation rate waveform. By obtaining this inflection point, this is set as the end timing of first divided main injection.

The broken line in the heat generation rate waveform and the injection rate waveform in FIG. 6 indicates a conventional fuel injection mode, and shows the heat generation rate waveform and the fuel injection pattern in a circumstance in which due to a lengthened injection period in main injection, the fuel supply amount to the same combustion field is increased, and the evaporation speed of fuel in this combustion field is greater than the oxygen supply speed. As indicated by this heat generation rate waveform, in a circumstance in which the evaporation speed of fuel in this combustion field is greater than the oxygen supply speed, the peak value of the heat generation rate is high, so smoke occurs due to inadequate oxygen in the combustion field, and combustion noise also is much greater.

### (Second Divided Main Injection)

As described above, an upper limit (an upper limit where the "fuel evaporation speed" is not made greater than the "oxygen supply speed") is set for the fuel injection amount (the fuel injection amount determined according to the injection period) in first divided main injection. Therefore, it is difficult to ensure a total main injection amount necessary in main injection (an injection amount obtained by subtracting the injection amount in the above pre-injection from the above total fuel injection amount for obtaining the required torque) only by first divided main injection. Therefore, second divided main injection is executed. That is, the portion that the injection amount in first divided main injection is inadequate for the total main injection amount required in main injection is supplemented using second divided main injection. The injection amount in this second divided main injection also is set such that the combustion field environment does not reach the smoke generation region, as shown in FIG. 7.

Also, there is a possibility that fuel injected in this second divided main injection will overlap the combustion field of fuel that was injected in pre-injection, injected from an injection nozzle on the upstream side in the swirl flow direction. In the combustion field of fuel that was injected in pre-injection, oxygen is being consumed by combustion of the fuel that was injected in pre-injection, but the injection amount of pre-injection is small and so the amount of oxygen consumed also is small. Accordingly, second divided main injection is executed for a combustion field where an adequate amount of oxygen is still ensured. Therefore, smoke does not occur due to second divided main injection.

Note that when the engine speed is comparatively low, it is possible for fuel in second divided main injection to be injected in a region that does not overlap the combustion field of pre-injection (a region on the downstream side in the swirl flow direction relative to the combustion field of pre-injection).

### (Injection Interval)

Next is a description of an injection interval, which is the period between the end timing of the above first divided main injection and the start timing of second divided main injection.

This injection interval is set as a period such that fuel injected in second divided main injection does not overlap with the combustion field of fuel that was injected in first divided main injection, and such that the temperature, the oxygen density, and so forth do not become uniform within the entire cavity 13b. This is specifically described below.

In an intake process of the engine 1, as the flow of air that flows into the cylinder via the intake port 15a, a swirl flow is generated in which the above-described cylinder center line P is the center of rotation, and this swirl flow occurs continuously within the cylinder even during a compression stroke.

Therefore, fuel that was injected in first divided main injection flows within the cylinder (specifically, within the cavity 13b) in the circumferential direction according to this swirl flow. That is, with passage of the time period of an expansion stroke, the combustion field of fuel that was injected in first divided main injection flows in the circumferential direction following the swirl flow, from a position facing the injection nozzles of the injectors 23 (the position immediately after injection).

Accordingly, at the point in time that subsequent second divided main injection is executed after first divided main injection that was precedingly executed, the combustion field of fuel that was injected in the precedingly executed first divided main injection is already flowing within the cylinder in the circumferential direction, and so fuel does not overlap among the two instances of divided main injection executed from the same injection nozzle.

In this case, the combustion field of fuel of first divided main injection that was injected from an injection nozzle on the upstream side in the swirl flow direction is flowing towards a position facing an injection nozzle on the downstream side in the swirl flow direction, so by adjusting the injection timing of subsequent second divided main injection, the injection of second divided main injection is prevented from overlapping the combustion field of fuel of first divided main injection, so fuel of second divided main injection can be injected toward a region where there is sufficient oxygen (a region different from the combustion field of fuel of first divided main injection, and a region below the smoke generation temperature: a combustion field where the fuel evaporation speed is less than the oxygen supply speed).

More specifically, consider a case where while the piston 13 moves from the top dead point to the bottom dead point (while moving 180° in crank angle), the swirl flow completes one revolution within the cylinder in the circumferential direction. That is, consider a case where the swirl ratio is "2". Also, consider a case where the number of injection nozzles of the injectors 23 is "10", and two instances of fuel injection (the above first divided main injection and second divided main injection) are executed as main injection.

In this case, if the interval between instances of divided main injection is set to 18° (9° in crank angle) of the cylinder interior in the circumferential direction, it is possible to prevent the injection of second divided main injection from overlapping the combustion field of fuel of first divided main injection.

FIG. 9 is a plan view that shows the state of the injection spray and the combustion field within the cylinder when the above first divided main injection and second divided main injection are executed. In FIG. 9, the injection spray and the combustion field of fuel that was injected in first divided main injection are indicated by symbol F1, and the injection spray of fuel that was injected in second divided main injection is indicated by symbol F2.

FIG. 9(a) shows the state of injection spray F1 immediately after executing first divided main injection. FIG. 9(b) shows the state immediately before execution of second divided main injection, in which the combustion field F1 of fuel of first divided main injection has flowed in the circumferential direction according to the swirl flow (the broken line indicates the state (the state shown in FIG. 9(a)) of injection spray F1 immediately after executing first divided main injection). FIG. 9(c) shows the state of both the combustion field F1 of fuel of first divided main injection and the injection spray F2 in second divided main injection when executing second divided main injection. As shown in FIGS. 9(b) and 9(c), fuel is not supplied between combustion fields F1 of fuel that was injected in first divided main injection, so a region exists where a comparatively large amount of oxygen remains (a combustion field where the oxygen supply speed is greater than the fuel evaporation speed). This region also is flowing in the circumferential direction within the cylinder according to the swirl flow. The above interval is set such that second divided main injection is executed at the point in time that this region has flowed to the position facing the injection nozzle of the injectors 23. That is, this interval is changed according to the speed of the swirl flow, or in other words, changed according to the engine speed. As the engine speed increases, the interval is set shorter.

If the interval of the respective instances of divided main injection is set in this manner, the combustion field of fuel that was injected in preceding first divided main injection and the injection spray of fuel injected in subsequent second divided main injection do not overlap, and so fuel that was injected in the respective instances of main injection can be combusted in a region where an adequate amount of oxygen is ensured. Therefore, an oxygen insufficiency does not occur in the respective combustion fields, incomplete combustion of the premix in the respective combustion fields is prevented, and so the occurrence of smoke can be avoided.

The interval of the respective instances of divided main injection may also be determined according to the responsiveness (speed of opening/closing operation) of the injectors 23. For example, the shortest opening/closing period determined according to the responsiveness of the injectors 23 may be set to 200 µs, for example. This divided main injection interval is not limited to the values given above.

Changes in the combustion field environment when executing the above sort of main injection will be described with reference to FIGS. 7 and 10. As described above, FIG. 7 is a map that shows changes in the gas temperature of the combustion field and the equivalence ratio of the combustion field. FIG. 10 respectively shows changes in the heat generation rate of the combustion field and the gas temperature of the combustion field.

As shown in these drawings, with starting of first divided main injection (point A in FIG. 7), the equivalence ratio of the combustion field moves to the rich side, and due to combustion of that fuel the combustion field gas temperature increases. The injection amount of first divided main injection in this case is set to a value such that the combustion field environment does not reach the smoke generation region, as described above.

When the combustion field of fuel that was injected in first divided main injection moves to the position shown in FIG. 9(b), second divided main injection is started (point B in FIG. 7). The combustion fields of fuel injected in the respective instances of divided main injection are different, so the arrows shown in FIG. 7 are not continuous. With execution of second divided main injection, the equivalence ratio of the combustion field moves to the rich side, and due to combustion of that fuel the combustion field gas temperature increases. The injection amount of second divided main injection in this case also is set to a value such that the combustion field environment does not reach the smoke generation region, as described above.

When combustion of fuel that was injected in second divided main injection ends, the equivalence ratio decreases, and delayed therefrom, the cylinder internal gas temperature also successively decreases.

With this sort of injection mode, even after the end of combustion of fuel that was injected in second divided main injection, the combustion field environment does not reach the smoke generation region, and so a function of preventing the occurrence of smoke in exhaust gas is continuously exhibited.

Thus, in the present embodiment, the occurrence of smoke due to execution of main injection is suppressed, so it is possible to attain an improvement in exhaust emissions.

Here, for reference, changes in the cylinder internal environment in a conventional fuel injection mode will be described with reference to FIGS. 10 and 11. Changes in cylinder internal environments respectively indicated by a single-dotted chained line and a double-dotted chained line in FIG. 11 (a map showing changes in the gas temperature and the equivalence ratio within the cylinder) correspond to changes in the cylinder internal gas temperature and the cylinder internal equivalence ratio indicated by a single-dotted chained line and a double-dotted chained line in FIG. 10.

First, the broken line in FIG. 11 indicates that the fuel supply speed is constant, and so the oxygen amount in the combustion field successively decreases with oxygen consumption that accompanies combustion. In this case, an encounter rate of fuel and oxygen in the combustion field decreases, resulting in a combustion mode of very slow combustion. In this sort of combustion mode, there is adequate oxygen in the combustion field, and the oxygen supply speed is always greater than the fuel evaporation speed, so smoke does not occur. However, because combustion is very slow in the combustion field, in this combustion mode there is a possibility that adequate torque cannot be obtained. Actually, this sort of combustion mode does not exist, and is not practical.

The single-dotted chained line in FIG. 11 indicates a combustion mode in a case where main injection is not divided, and the air-fuel mixture has been ignited at the TDC. In this case, combustion efficiency is high because ignition occurs when cylinder internal pressure is maximum, but in this circumstance the fuel evaporation speed in the combustion field is greater than the oxygen supply speed, so an oxygen insufficiency occurs at the location of the combustion field and thus smoke occurs.

The double-dotted chained line in FIG. 11 indicates a combustion mode in a case where main injection is executed via two instances of divided main injection, and the timing of that injection has been greatly shifted to the angle of delay side. In this case, although smoke does not occur, heat efficiency worsens, and adequate combustion pressure cannot be obtained, so engine torque also is inadequate.

Thus, as is clear from a comparison of the changes in the cylinder internal environment shown in FIG. 11 and the changes in the respective combustion field environments shown in FIG. 7, according to the combustion mode in the combustion field according to the present embodiment, while also ensuring adequate engine torque, the occurrence of smoke due to execution of main injection is suppressed, so it is possible to attain an improvement in exhaust emissions.

### - Other embodiments -

In the embodiments described above, a case was described in which the present invention is applied to an in-line four-cylinder diesel engine mounted in an automobile. The present invention is not limited to use in an automobile, and is applicable also to engines used in other applications. Also, there is no particular limitation with respect to the number of cylinders or the engine type (classified as an in-line engine, V-type engine, and so forth).

Also, in the embodiments described above, the maniverter 77 is provided with the NSR catalyst 75 and the DPNR catalyst 76, but a maniverter provided with the NSR catalyst 75 and a diesel particulate filter (DPF) may be used as well.

In the above embodiments, main injection is divided into two divisions, but the invention is also applicable when dividing main injection into three or more divisions. In this case as well, in each instance of divided main injection, that divided main injection is stopped before the fuel evaporation speed in the combustion field becomes greater than the oxygen supply speed. The broken line in FIG. 7 shows changes in the combustion field environment when, in a case where main injection has been divided into three divisions, the third divided main injection was executed.

The present invention is applicable, in a common rail cylinder-internal direct injection multi-cylinder diesel engine mounted in an automobile, to fuel injection control performed when executing main injection divided into a plurality of instances of divided main injection.

## Claims

1. A fuel injection control apparatus of a compression self-igniting internal combustion engine that has a fuel injection valve with a multidirectional injection nozzle facing a combustion chamber, and that is capable of executing main injection with an injection pattern of the fuel injection valve being a plurality of instances of divided main injection, the fuel injection control apparatus comprising:
divided main injection control means that temporarily stops, when executing the divided main injection, before an evaporation speed of fuel injected in that divided main injection becomes greater than an oxygen supply speed in a combustion field where that fuel is being supplied, the divided main injection toward that combustion field.

2. The fuel injection control apparatus of an internal combustion engine according to claim 1,
wherein the divided main injection control means, when executing the divided main injection, sets the stop timing where the divided main injection is temporarily stopped so as to adopt a fuel injection amount where smoke does not occur in the combustion field.

3. The fuel injection control apparatus of an internal combustion engine according to claim 1,
wherein the divided main injection control means, when executing a next instance of divided main injection following the stoppage of divided main injection, executes fuel injection of a fuel injection amount where smoke does not occur, toward the combustion field where the fuel evaporation speed is less than the oxygen supply speed.

4. A fuel injection control apparatus of a compression self-igniting internal combustion engine that has a fuel injection valve with a multidirectional injection nozzle facing a combustion chamber, and that is capable of executing main injection with an injection pattern of the fuel injection valve being a plurality of instances of divided main injection,
wherein a gas of a combustion field where fuel is supplied by execution of the divided main injection moves in a circumferential direction within a cylinder according to a swirl flow within the cylinder,
the fuel injection control apparatus comprising:
divided main injection control means that stops, when executing an initial divided main injection, the divided main injection before an evaporation speed of fuel injected in the divided main injection becomes greater than an oxygen supply speed in a combustion field where the fuel is being supplied, continues the stopped state of divided main injection during a time period prior to when, in movement of the combustion field that was formed by this initial divided main injection in the circumferential direction within the cylinder according to the swirl flow, the combustion field where the evaporation speed of this fuel is less than the oxygen supply speed moves to a position facing the multidirectional injection nozzle, and thereafter, executes a next divided main injection at the time when the combustion field where the evaporation speed of this fuel is less than the oxygen supply speed has arrived at the position facing the multidirectional injection nozzle.

5. The fuel injection control apparatus of an internal combustion engine according to claim 4,
wherein auxiliary injection is executed prior to the main injection, and
the divided main injection control means executes the next divided main injection so as to overlap a combustion field that has been formed by fuel that was injected by auxiliary injection from an injection nozzle positioned on an upstream side of the swirl flow, the combustion field having moved in the circumferential direction within the cylinder.

6. The fuel injection control apparatus of an internal combustion engine according to any one of claims 1 to 5,
wherein an interval from an injection stop time of a preceding divided main injection to an injection start time of a subsequent divided main injection is set according to a shortest opening/closing period of the fuel injection valve.
